# DEMANDE DE BREVET EUROPEEN

(11) **EP 3 244 376 A1**
(43) Date de publication de la demande: **15.11.2017**
(21) Numéro de dépôt: 17170239.2
(22) Date de dépôt: 09.05.2017
(51) Int. Cl.: G07F 7/08, G07F 19/00

(54) **TERMINAL DE PAIEMENT MULTI-SUPPORTS**

(30) Priorité: 10.05.2016 BE 201605331; 12.07.2016 BE 201605582; 25.07.2016 BE 201605612
(71) Demandeur: Atos Worldline, 1130 Bruxelles (BE)
(72) Inventeur: NIEUWBORG, Jan, 2610 WILRIJK (BE); RICHELLE, Arnaud, 4000 Liège (BE)
(74) Mandataire: Debay, Yves

(57) **Abrégé**

La présente invention concerne terminal comprenant une architecture créant une cage de sécurité adaptée à détecter tout intrusion ou tentative d'intrusion dans le volume formé par ladite cage.

## Description

### DOMAINE TECHNIQUE DE L'INVENTION

L'invention se rapporte au domaine des terminaux en particulier aux terminaux comprenant des lecteurs de cartes à puce et magnétiques, et moyens de paiement sans contact et leur utilisation dans les bornes de paiement ou de retrait d'argent automatisées ou les bornes de sécurité ou les automates de vente.

### ETAT DE LA TECHNIQUE ANTERIEURE

Avec le développement des technologies, il est apparu au fil des années de multiples moyens de paiement : la carte à puce, la carte à bande magnétique, des cartes ou appareils utilisant une technologie d'identification sans contact, telle que la communication en champ proche ou NFC, la radio-identification ou RFID, les codes d'authentification visuelle, par exemple, QR code, séquence lumineuse, reconnaissance biométrique etc.

Avec une telle quantité de moyens de paiement à disposition des personnes et en particulier de clients/utilisateurs, il devient indispensable, en particulier pour les commerçants, d'accepter un large choix de moyens de paiement afin d'éviter de perdre ledit client/utilisateur. Pour ce faire, il est nécessaire d'éviter la multiplication des bornes de paiement n'acceptant qu'un seul moyen de paiement.

En effet, cette multiplication de bornes de paiement entraîne nécessairement un certain nombre de désavantages, en particulier, la quantité de place nécessaire pour les stocker, le coût individuel d'entretien mais également d'utilisation ainsi que leur surveillance et leur sécurisation face aux multiples manipulations et particulier contre les actes de malveillance cherchant à récolter les informations ou signal relatif au paiement.

### EXPOSE DE L'INVENTION

La présente invention a donc pour objet de proposer un terminal compact de paiement acceptant de multiples supports de paiement, et permettant de pallier au moins une partie des inconvénients de l'art antérieur.

A cet effet, l'invention concerne un terminal en particulier un terminal ayant un écran réalisant une fonction d'affichage et de clavier et caractérisé en ce qu'il comprend au moins :
- Un lecteur de cartes à puce à contact,
- Un lecteur de cartes à bande magnétique, comprenant une tête de lecture,
- Un capteur NFC comprenant une antenne NFC disposée autour de l'écran,
- Au moins un capteur de proximité, activant certaine fonctionnalités du terminal lors de la détection d'un utilisateur à proximité,
- Une carte électronique principale munie d'au moins un processeur et connectée aux lecteurs, capteurs et à l'écran, la carte électronique principale étant configurée pour piloter lesdits lecteurs, capteur et écran, en réalisant des fonctions de détection, de protection de confidentialité des données avec l'écran d'affichage et de contrôle du clavier virtuel sur l'écran, de sécurité et d'authentification des opérations de paiement et des opération de communication sécurisées avec l'environnement extérieur,
- Une carte électronique de connexion comprenant au moins une couche de sécurité, la carte électronique de connexion étant connectée à la carte électronique principale et apte à permettre au terminal de communiquer avec l'environnement extérieur et de recevoir l'alimentation en énergie,
- Une carte électronique frontale de sécurité comprenant au moins une couche de sécurité, la carte électronique frontale de sécurité étant apte à être disposée derrière l'écran et l'antenne NFC,
- Une membrane flexible de sécurité comprenant au moins une couche de sécurité, et étant apte à recouvrir les côtés du dispositif à l'exception de la face avant et la face arrière du terminal,
la carte électronique frontale de sécurité, la carte électronique de connexion et la membrane flexible de sécurité forment ensemble une cage de sécurité connectée la carte électronique principale, dans la cage de sécurité les composant électronique des cartes et les moyen de connexion inter-cartes sont disposés, la densité des conducteurs dans chaque élément de la cage de sécurité étant apte à permettre la détection par la carte électronique principale, de toute intrusion à l'intérieur du volume formé par la cage de sécurité et le blocage immédiat par la carte principale de tout traitement d'opération de paiement après la détection d'une intrusion.

Selon une particularité, les éléments du terminal sont disposés dans un carénage extérieur constitué d'une unique pièce et apte recouvrir un châssis et comprenant au moins :
- une fente adaptée au passage d'une carte à puce
- une première ouverture sur la face avant du terminal et donnant accès à l'écran nécessaire à la fonction d'affichage et de clavier virtuel,
- une seconde ouverture sur une face latérale du terminal et donnant accès à au moins une tête de lecture d'un lecteur de cartes à bande magnétique,
le châssis étant constitué d'au moins de trois compartiments :
- un premier compartiment muni d'une fente qui coïncide avec la fente du carénage extérieur et apte à recevoir le lecteur de cartes à puce à contact,
- un second compartiment dont l'un des côtés, correspondant à la face avant du terminal, est obstrué par l'écran nécessaire à la fonction d'affichage et de clavier virtuel et par l'antenne NFC entourant l'écran,
- un troisième compartiment (15) apte à recevoir la carte électronique principale, et dont l'un des côtés du compartiment correspondant à la face arrière du terminal, est obstrué par la carte électronique de connexion,
et en ce que ladite membrane flexible de sécurité est disposée entre le carénage extérieur et le châssis.

Selon une autre particularité, la carte électronique de connexion est munie d'au moins un capteur d'enlèvement du carénage extérieur.

Selon une autre particularité, le terminal comprend un capteur vidéo connecté et contrôlé par la carte électronique principale.

Selon une autre particularité, l'antenne NFC est connectée au capteur NFC sur la carte électronique frontale de sécurit, par un circuit imprimé flexible, l'écran est connecté à la carte électronique principale par un circuit imprimé flexible passant à travers la cage de sécurité, les circuits imprimés pouvant comprendre au moins une couche de sécurité.

Selon une autre particularité, la carte électronique de connexion comprenant au moins une couche de sécurité et est connectée à la carte électronique principale au moyen d'un connecteur de type couple mal/femelle.

Selon une autre particularité, les couches de sécurité consistent en un câblage de sécurité formant un motif recouvrant toute la surface de la couche de sécurité, le motif ayant un pas fin empêchant toutes modifications ou altération de la couche de sécurité sans être détectée par la carte électronique principale.

Selon une autre particularité, le pourtour de la fente du carénage extérieur est constitué d'un matériau translucide et muni d'un rétroéclairage permettant à un utilisateur de détecter tout dispositif étranger au terminal susceptible de capter des informations lors de son utilisation.

Selon une autre particularité, le lecteur de cartes à puce est orienté de manière à ce que l'introduction d'une carte à puce dans les fentes est effectuée selon un angle compris entre 0° et 90°, par rapport à la face avant du terminal, de préférence entre 20° et 60°, plus préférentiellement entre 30° et 45°.

Selon une autre particularité, le capteur de proximité, les lecteurs et le capteur vidéo sont connectés sur la carte électronique principale.

Selon une autre particularité, la carte électronique de connexion comprend, sur la surface extérieure à la cage de sécurité, au moins un port adapté à recevoir un connecteur du type Ethernet, et/ou Série, et/ou USB, et/ou une carte mémoire, et/ou une carte électronique additionnelle afin d'offrir des fonctionnalités additionnelles, en particulier, de communication sans fil.

Selon une autre particularité, le carénage extérieur et les éléments du terminal sont agencés pour constituer un terminal entièrement étanche, lors d'une immersion totale du terminal à une profondeur de moins de 30cm pendant une durée illimitée.

Selon une autre particularité, l'antenne NFC est intégrée dans un joint d'étanchéité entourant écran.

Ainsi le terminal constitue un terminal inviolable pouvant être utilisé sur une borne de paiement, de retrait d'argent, ou de contrôle d'un automate de distribution automatique et vente de produits.

Selon une autre mode de réalisation de ce terminal inviolable peut être disposé dans un carénage spécifique qui avec les autre éléments du terminal inviolable peuvent permettre l'obtention un terminal inviolable et étanche.

### BREVE DESCRIPTION DES FIGURES

D'autres caractéristiques, détails et avantages de l'invention ressortiront à la lecture de la description qui suit en référence aux figures annexées, qui illustrent :
- Fig. 1 illustre une vue d'un mode de réalisation du dispositif 1,
- Fig. 2 illustre une vue en coupe longitudinale du châssis 6 d'un mode de réalisation,
- Fig. 3 illustre une vue schématique du dispositif sans le carénage extérieur 2,
- Fig. 4 illustre une représentation schématique de la connexion entre les différents éléments du dispositif,
- Fig. 5 illustre une vue schématique d'un écran (5) utilisé d'un mode de réalisation du dispositif 1,
- Fig. 6 illustre une vue schématique d'une tête de lecture 36 d'un moyen de lecture de cartes à bande magnétique utilisée dans un mode de réalisation de la borne 1,
- Fig. 7 illustre un gros plan de la fente 8 du premier compartiment 7,
- Fig. 8 illustre un gros plan d'un schéma en coupe d'un mode de réalisation selon l'invention du dispositif 1, le gros plan étant concentré sur les fentes 3, 8 permettant l'introduction d'une carte à puce / puce dans le terminal,
- Fig. 9 illustre une vue éclatée des éléments constituant le dispositif 1, sans le châssis 6 et le carénage extérieur 2,
- Fig. 10 illustre une vue éclatée des éléments qui composent la cage de sécurité 19 avec le châssis 6,
- Fig. 11, illustre une vue schématique de l'interaction entre le board16 de connexion électronique et la carte principale 17,
- Fig. 12, illustre une vue schématique de l'interaction entre le conseil de sécurité avant 13 et la carte principale 17,
- Fig. 13 et 14 illustrent des vues schématiques des moyens d'étanchéité 31,
- Fig. 15 illustre une vue en coupe longitudinale du dispositif 1.

### DESCRIPTION DETAILLEE DE DIFFERENTS MODES DE REALISATION DE L'INVENTION

De nombreuses combinaisons peuvent être envisagées sans sortir du cadre de l'invention ; l'homme de métier choisira l'une ou l'autre en fonction des contraintes économiques, ergonomiques, dimensionnelles ou autres qu'il devra respecter.

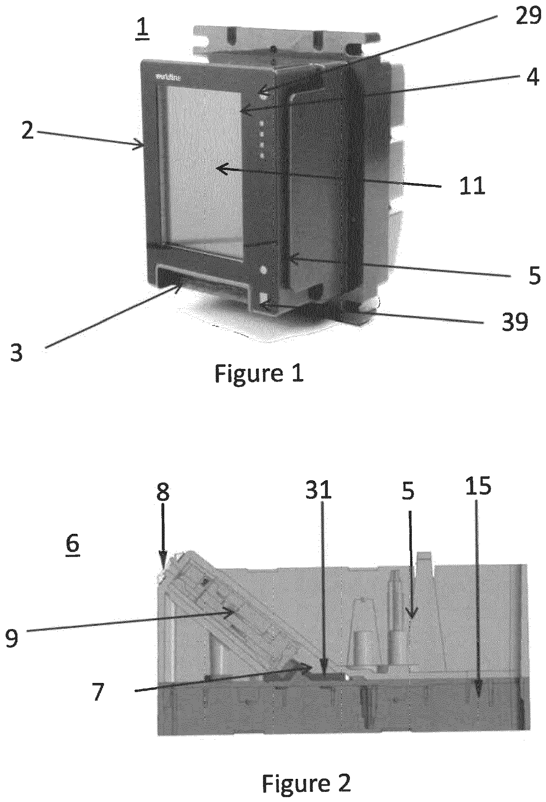

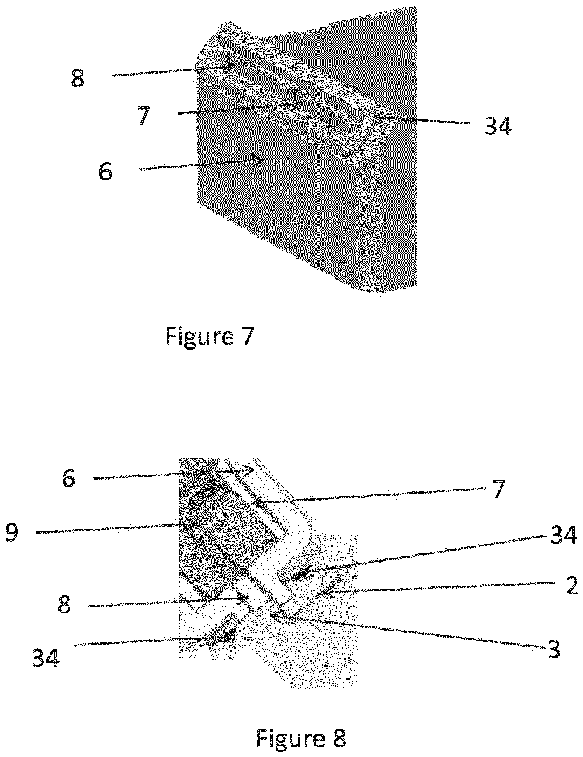

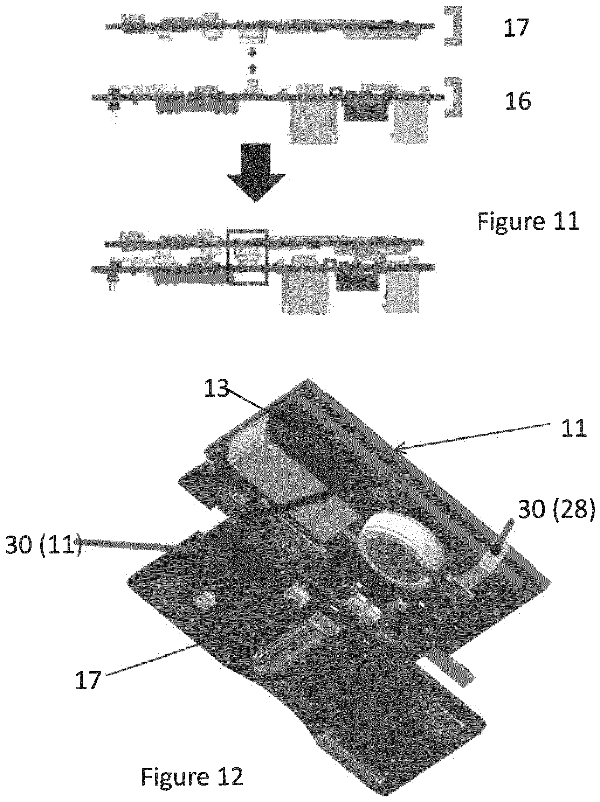

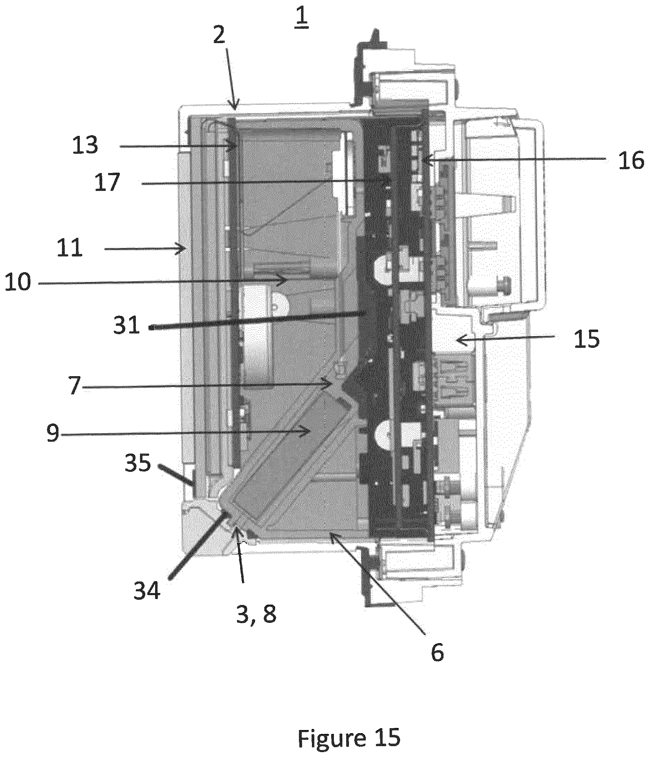

Plus particulièrement, selon un mode de l'invention illustré par au moins l'un des figures 1 à 15, le terminal comprend au moins:
- un carénage extérieur 2 pouvant contenir tous les éléments du dispositif et muni d'au moins :
   o une fente 3 adaptée au passage d'une carte à puce,
   o une première ouverture 4 sur la face avant du terminal et donnant accès à l'écran nécessaire à la fonction d'affichage et de clavier virtuel,
   o une seconde ouverture 5 sur une face latérale du terminal et donnant accès à au moins une tête de lecture d'un lecteur de cartes à bande magnétique,
- un châssis 6 composé d'au moins trois compartiments:
   o un premier compartiment 7 muni d'une fente 8 adaptée au passage d'une carte à puce. Le compartiment 7 est adapté à recevoir un moyen de lecture de cartes à puce à contact 9, de préférence ce moyen de lecture de cartes à puce résistant à l'eau, c'est-à-dire que celui-ci continue de fonctionner même s'il a été exposé à l'eau,

Une fois le terminal assemblé, les fentes 3 et 8 coïncident afin qu'une carte à puce puisse être insérée dans le lecteur de cartes à puce 9.
∘ un second compartiment 10 dont l'un de ses côtés, correspondant à la face avant du terminal, est obstrué par un écran 11 nécessaire à la fonction d'affichage et de clavier virtuel 40 et par une antenne NFC 12 entourant l'écran 11. Le second compartiment 10 est adapté à recevoir une carte électronique frontale de sécurité 13 comprenant au moins une couche de sécurité 14, la carte électronique frontale 13 étant disposée derrière l'écran 11 et l'antenne NFC 12.
∘ un troisième compartiment 15 dont l'un de ses côtés, correspondant à la face arrière du terminal, est obstrué par une carte électronique de connexion 16 comprenant au moins une couche de sécurité 14. La carte électronique de connexion 16 permet au terminal de paiement 1 de communiquer avec l'environnement extérieur et reçoit l'alimentation en énergie nécessaire au bon fonctionnement du terminal 1. Le troisième compartiment 15 est également adapté à recevoir au moins une carte électronique principale 17 munie d'au moins un processeur 38 ou microcontrôleur 38 et connectée a au moins le lecteur de carte à puce 9 et l'écran 11, et optionnellement a d'autres lecteurs 27, et capteur 20, 28, 29, et 39.

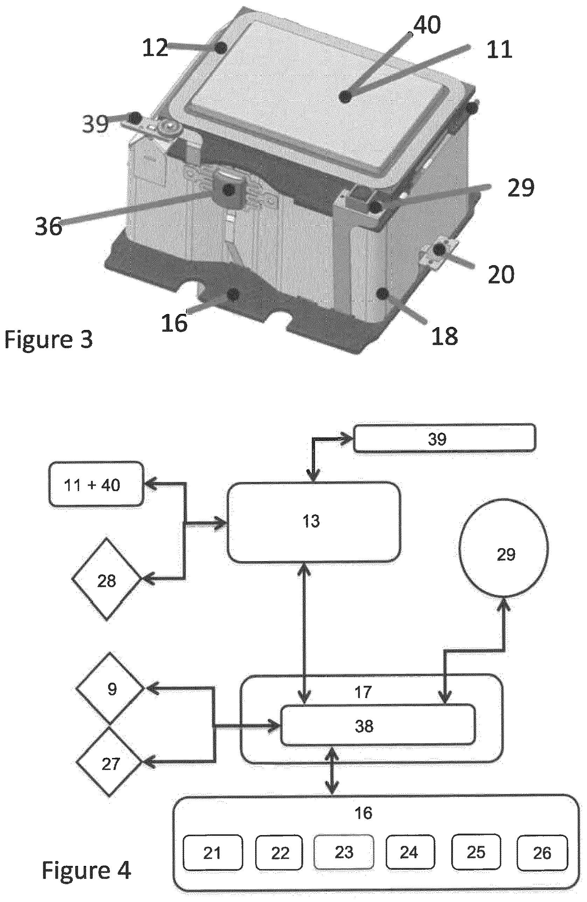

Comme illustré sur la figure 4, la carte électronique principale 17 est reliée aux différentes cartes électroniques 13, 16 et configurée pour piloter les différents éléments du terminal 1, en particulier lecteurs 9, 27, capteurs 20, 28, 29, 39, et écran 11, en réalisant des fonctions de détection, de protection de confidentialité des données avec l'écran d'affichage et de contrôle du clavier virtuel 40 sur l'écran 11, de sécurité et d'authentification des opérations de paiement et des opérations de communication sécurisées avec l'environnement extérieur, en particulier un système informatique

Le système informatique pouvant être un autre dispositif électronique par exemple une caisse enregistreuse, un serveur informatique, un automate de vente, une borne de paiement ou tout autre système informatisé connu de l'homme du métier. La communication avec le système informatique peut se faire de manière filaire ou sans fil (wifi, GPRS, 3G, 4G, Bluetooth, LiFi, infrarouge, radiofréquence).

Une membrane flexible de sécurité 18 comprenant au moins une couche de sécurité 14, et recouvre le châssis 6, en particulier les côtés du dispositif 1 à l'exception de la face avant et la face arrière du terminal, et de façon a être disposée entre le carénage extérieur 2 et le châssis 6 lorsque le terminal 1 est assemblé.

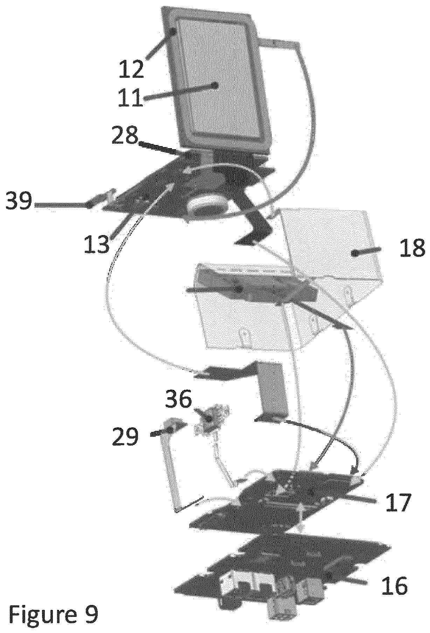

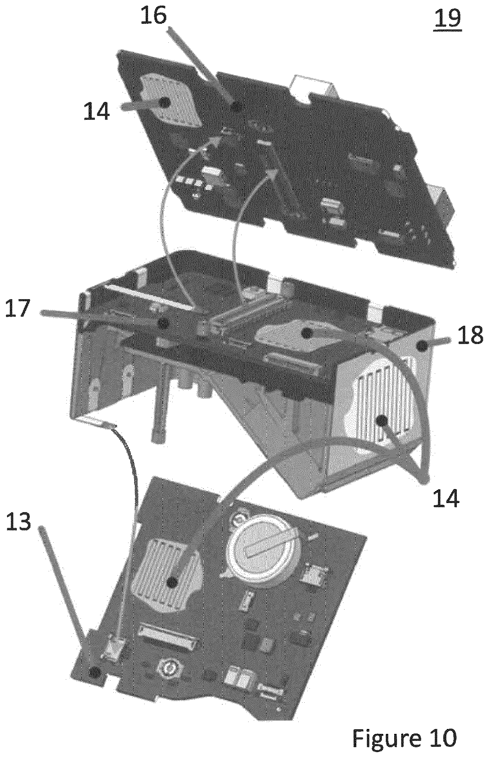

Une telle construction, membrane flexible de sécurité 18 + carte électronique de connexion 16 + carte électronique frontale de sécurité 13, permet de créer une cage de sécurité 19 qui est reliée à la carte principale 17. Comme illustré sur les figures 9 et 10, c'est dans cette cage de sécurité 19, que les composants électroniques des cartes électroniques 13, 16, 17 et les conducteurs de liaison inter-cartes sont disposés. La densité des conducteurs dans chaque élément de la cage de sécurité, et en particulier les différentes couches de sécurité 14 des cartes et de la membrane sont aptes à permettre la détection par la carte électronique principale 17, de toute intrusion ou tentative d'intrusion à l'intérieur du volume formé par la cage de sécurité. Lorsqu'une telle intrusion ou tentative est détectée, le processeur initie automatiquement le blocage immédiat de tout traitement d'opération de paiement et envoie une alarme dans l'environnement extérieur, de préférence le réseau auquel le terminal est connecté au moyen de la carte de connexion 16.

Cette détection d'intrusion est réalisée par un processeur disposé sur la carte principale pouvant être le processeur contrôlant l'intégralité du terminal ou un processeur distinct de celui-ci. Le processeur surveille en permanence le bon fonctionnement du circuit électrique au sein de la couche de sécurité de la cage de sécurité et toute altération de son fonctionnement est considérée comme une intrusion ou tentative d'intrusion. Ainsi le processeur peut surveillé la réception d'un signal envoyé en continu ou périodiquement sur la couche de sécurité, et/ou dététer une variation d'intensité sur le circuit composant la couche de sécurité. En outre le circuit électrique de la couche de sécurité est complétement indépendant du circuit électrique permettant le fonctionnement du terminal. En d'autres termes, dans certains modes de réalisation, les composants électroniques des cartes peuvent passer au travers des circuits électriques au sein de la couche de sécurité sans en altéré le fonctionnement

Dans un autre mode de réalisation, la carte électronique de connexion 16 est munie d'au moins un capteur d'enlèvement 20 du carénage extérieur 2.

Dans un autre mode de réalisation, la carte électronique de connexion 16 comprend, sur la surface extérieure à la cage de sécurité 19, au moins un port adapté à recevoir un connecteur du type Ethernet 21, et/ou Série 22, et/ou USB 23, et/ou une carte mémoire 24, et/ou un connecteur de connexion sans fil (Wifi, GPRS, 3G, 4G, Bluetooth, LiFi, infrarouge, radiofréquence) 25, et/ou une carte électronique additionnelle 26 afin d'offrir des fonctionnalités additionnelles.

Selon les modes de réalisations, le terminal 1 peut être muni de différents lecteurs ou capteurs additionnels afin de fournir une large palette de moyens de paiement, à titre d'exemple, un lecteur de carte à bande magnétique 27, un lecteur de carte à puce 9, un capteur NFC 28, un capteur vidéo 29 afin de reconnaître un identifiant tel que une carte/objet d'identification, un code QR, un signal lumineux, des caractéristiques biométriques et/ou morphologiques.

Dans un autre mode de réalisation, le terminal comprend un outre une camera 29 ou un capteur de proximité 39, pouvant identifier ou détecter la présence d'un utilisateur, afin par exemple d'illuminer l'écran tactile et déclencher l'affichage d'un premier message d'utilisation. Le carénage extérieur 2 comprends alors de préférence, à la position de la camera 29 ou du capteur de proximité 39 (camera 29 et capteur de proximité 39 peuvent être confondus) un matériau transparent. De préférence, le dit matériau transparent est inclus dans le carénage extérieur 2 au moment de la fabrication de celui-ci (durant l'étape de moulage par exemple), afin d'obtenir une jointure entre le matériau constituant le carénage extérieur 2 et le matériau transparent complètement étanche.

Les différents lecteurs ou capteurs sont reliés 30(9/27), 30(20/28/29/39) et 30(11) aux cartes électroniques, de préférence directement sur la carte électronique principale 17 afin d'être contrôlés et pilotés par le processeur 38. Néanmoins, pour certain mode de réalisation, les capteurs ou lecteurs peut être connecté à une autre carte électronique, par exemple, l'antenne NFC 12 disposé autour de l'écran 11 est préférablement connectée à un « frontend » 28 localisé sur la carte électronique frontale 13 afin de minimiser la distance entre l'antenne 12 et le « frontend » 28 pour éviter toute sorte de perturbation électromagnétique.

Dans un mode de réalisation, la connexion entre les capteurs/lecteurs et les cartes électroniques est effectuée par un câble 30, ou de préférence par un circuit imprimé 30, avantageusement celui-ci est flexible et éventuellement imperméable, plus avantageusement les câbles 30 sont plats. Les connexions entre les capteurs/lecteurs et les cartes électroniques passent dans la cage de sécurité 19 et chaque circuit imprimé de connexion 30 pouvant comprendre au moins une couche de sécurité 14.

Selon un mode de réalisation, les couches de sécurité 14 consistent en un câblage de sécurité formant un motif recouvrant toute la surface de la couche de sécurité 14, le motif ayant un pas fin empêchant toutes modifications ou altérations de la couche de sécurité sans être détectée, par exemple par la carte électronique principale 17 afin de former un système inviolable.

Selon un autre mode de réalisation, les éléments constituant le terminal peuvent être inséré dans un carénage extérieur 2 étanche constitué d'une unique pièce, des modifications additionnelles peuvent être entreprises afin d'obtenir un terminal étanche. Par exemple, les premier 7 et troisième 15 compartiments sont agencés de manière à ce qu'ils puissent accueillir au travers de leurs parois respectives, au moins le circuit imprimé 30 entre la carte électronique principale 17 et le lecteur de cartes à puce 9. Avantageusement, la connexion 30 passe au travers d'un moyen d'étanchéité 31 placé dans au moins une paroi du premier 7 et/ou troisième 15 compartiment(s) de sorte que l'eau ne puisse pas passer du premier 7 compartiment au troisième 15 compartiment.

Ainsi, selon les modes de réalisation, lorsque le terminal 1 comprend un premier 7 et un troisième 15 compartiment ayant une paroi commune (par « paroi commune » , on entend : deux parois juxtaposées l'une à l'autre, ou une paroi unique ayant pour chaque surface extérieure un compartiment différent), un unique moyen d'étanchéité 31 peut être utilisé dans la paroi commune pour permettre au moyen de liaison électronique 30 de passer d'un compartiment à l'autre compartiment tout en maintenant le compartiment, qui comprend au moins la carte électronique principale 17 étanche. Lorsque le dispositif comprend plus de deux compartiments, on peut choisir de mettre plus d'un moyen d'étanchéité 31 afin de s'assurer de l'étanchéité de tous les compartiments traversés par la connexion entre la carte électronique principale 17et le lecteur de cartes à puce 9.

Le moyen d'étanchéité 31 peut être un joint ou tout autre élément connu de l'homme du métier permettant d'empêcher l'eau de passer mais autorisant le passage du moyen de liaison électronique 30. Un tel joint peut être comprimé entre les deux parois juxtaposées des compartiments formant la paroi commune ou être intégré à la paroi unique lors de la fabrication de celle-ci.

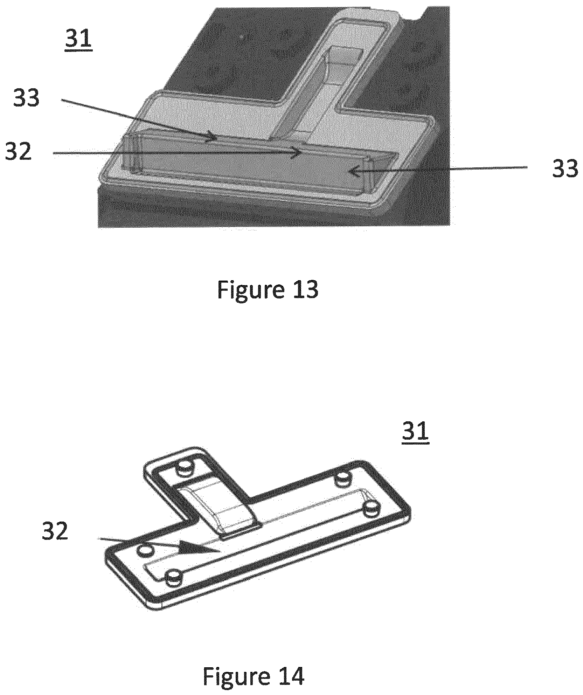

Dans un mode de réalisation illustré par les figures 13 et 14, le moyen d'étanchéité 31 est en matière élastique et de préférence comprend une fente 32 munie d'au moins deux lèvres 33 qui se chevauchent de sorte que les lèvres 33 épousent la surface du moyen de liaison électronique 30 entre la carte électronique principale 17 et le lecteur de cartes à puce 9, permettant ainsi une étanchéité parfaite. Une telle configuration permet d'obtenir une étanchéité parfaite même lorsque le moyen de liaison électronique 30 bouge. En effet, les lèvres 33 épousent parfaitement le pourtour du moyen de liaison électronique 30 quelque soit sa position, en particulier lorsque celui-ci est plat.

Dans un mode de réalisation, le moyen d'étanchéité comprend une butée triangulaire, permettant de caler le moyen de lecture de cartes à puce dans le premier compartiment. En outre, le moyen d'étanchéité 31 peut comprendre une rainure permettant de donner au moyen de liaison électronique 30 l'espace nécessaire à son déploiement afin de connecter le moyen de lecture de cartes à puce à la carte électronique principale.

Dans un autre mode de réalisation, le moyen d'étanchéité 31 est muni d'au moins un ergot coopérant avec au moins une paroi du premier compartiment et/ou du troisième compartiment, par exemple par l'intermédiaire d'un trou ou trou borgne, afin permettre son maintien, en particulier lors de l'assemblage et d'obtenir une construction plus robuste.

Dans un autre mode de réalisation, le pourtour de la fente 3 du carénage extérieur 2 est constitué d'un matériau translucide. De préférence, le pourtour est muni d'un rétroéclairage permettant à un utilisateur de détecter tout dispositif étranger au terminal 1 susceptible de capter des informations lors de son utilisation

Selon le mode de réalisation choisi, le lecteur de cartes à puce 9 est orienté de manière à ce que l'introduction de la cartes à puce dans les fentes 3, 8 est effectuée selon un angle compris entre 0° et 90°, par rapport à la face avant du terminal ou du sol, de préférence entre 20° et 60°, plus préférentiellement entre 30° et 45°. Ainsi, la carte à puce est introduite dans une direction sensiblement de bas en haut. Cette configuration permet de limiter l'introduction d'eau, en particulier d'eau de pluie ou d'eau de ruissellement dans le lecteur de cartes à puce 9. En outre, avec une telle configuration, le moyen de liaison électronique 30 entre la carte électronique principale 17 et le lecteur de cartes à puce 9 passe, de préférence, à travers du moyen d'étanchéité 31 qui se trouve dans la partie supérieure du premier compartiment 7 limitant encore plus le risque de voir de l'eau s'introduire dans le troisième compartiment 15.

Dans un mode de réalisation, la fente 8 du premier compartiment 7 est munie sur son pourtour d'un moyen d'étanchéité 34, de sorte que lorsque le dispositif est assemblé, le moyen d'étanchéité 34 est en contact avec le pourtour de la fente 3 du carénage extérieur 2 permettant de réaliser une liaison étanche. Un tel moyen 34 peut être un joint ou tout autre élément connu de l'homme du métier permettant d'empêcher l'eau de passer.

Selon un mode de réalisation, l'écran 11 se trouve dans les seconds compartiments 10 et visibles à travers la première ouverture 4 du carénage extérieur 2. De préférence, l'écran11 est un écran tactile.

L'utilisation d'un écran tactile permet au dispositif d'avoir une surface extérieure de l'écran favorisant l'étanchéité et une fonction de clavier virtuel 40, permettant ainsi de se passer de boutons mécaniques susceptibles de faciliter l'entrée de l'eau dans le terminal.

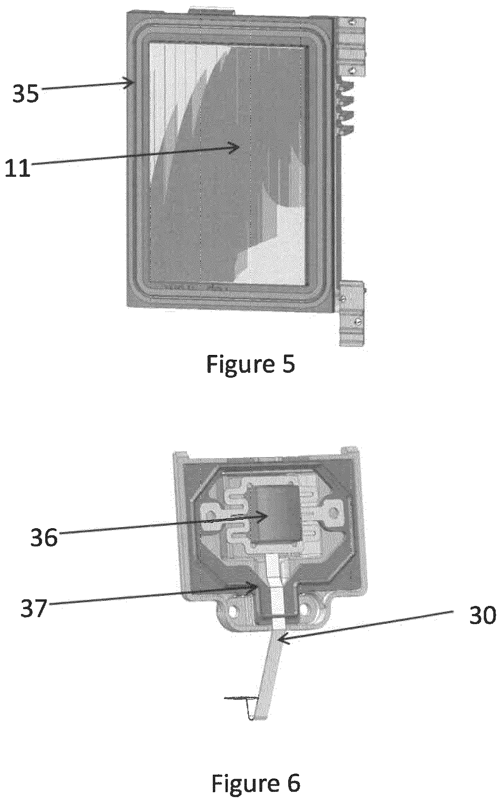

Selon un autre mode de réalisation illustré par la figure 5, l'écran tactile 11 est muni sur son pourtour d'un moyen d'étanchéité 35, de sorte que lorsque le terminal est assemblé, le moyen d'étanchéité 35 est en contact d'une part avec le pourtour de la première ouverture 4 du carénage extérieur 2 et d'autre part avec le pourtour de l'écran 11 permettant de réaliser une liaison étanche avec la face interne du carénage 2.

Selon un autre mode de réalisation, le dispositif comprend un lecteur 27 de cartes à bande(s) magnétique(s) composé d'une tête de lecture 36. La tête de lecture 36 est disposée sur une face du terminal à l'exception de la face arrière, de préférence, une face latérale du terminal, sollicitée élastiquement vers l'extérieur du carénage 2 et dont la taille est adaptée à la seconde ouverture 5 formée sur le carénage extérieur 2.

Selon un mode de réalisation illustré par la figure 6, lorsque le terminal 1 est muni d'une tête de lecture magnétique 36, la tête de lecture 36 est munie sur son pourtour d'un moyen d'étanchéité 37 de sorte que le moyen d'étanchéité 37 coopère avec la surface intérieure du carénage extérieur 2 afin de rendre la liaison entre la tête de lecture 37 et le carénage extérieur étanche 2. Un tel moyen 37 peut être un joint ou tout autre élément connu de l'homme du métier permettant d'empêcher l'eau de passer.

Dans ce mode de réalisation particulier, un moyen de connexion 30 entre la tête de lecture 36 et le moyen de lecture de bandes magnétiques 27 pouvant être intégré à une carte électronique de préférence principale, peut passer à travers ledit moyen d'étanchéité 37 afin de s'assurer de l'étanchéité complète de la tête de lecture et de sa communication avec le processeur 38.

Selon un autre mode de réalisation, le carénage extérieur 2 peut être muni d'un guide adapté à guider le déplacement de la carte magnétique le long de la tête de lecture 36 du lecteur de bandes magnétiques. Un tel guide peut être sous la forme d'une gouttière dans laquelle la carte est glissée tout le long afin d'être restée en contact avec la tête de lecture magnétique et lire les informations de la ou des piste(s) magnétique(s). En l'absence de carte dans le terminal la tête est en saillie dans la rainure et laisse entre le guide et la tête un espace inférieur à l'épaisseur de la carte magnétique.

Dans un mode de réalisation préféré, les moyens d'étanchéité sont en mousse de caoutchouc EPDM avec une structure cellulaire fermée offrant une meilleure durabilité et la plus grande résistance aux intempéries que tous les caoutchoucs polyvalents. Une telle mousse peut être couplée avec un adhésif afin de solidariser celle-ci avec les éléments qui l'entoure. A titre d'exemple, l'adhésif peut être au butyle et/ou en résine synthétique. A titre d'exemple uniquement, un matériau utilisable afin d'obtenir l'invention peut être l'EPT SEALER No.6800 Series de chez NITTO, en particulier la référence 6801 et plus particulièrement d'une épaisseur de 2mm et ayant besoin d'une compression de 25% ou moins pour obtenir une étanchéité à l'eau.

Ainsi un tel design, le terminal reste fonctionnel en cas de projection d'eau, tel que la pluie, mais également lors de conditions plus extrêmes tels que des inondation, tempêtes ou actes de malveillance durant lesquelles le terminal se retrouve totalement immergé.

En effet avec une telle configuration qui utilise un carénage extérieur fait d'une unique pièce et des moyens d'étanchéité, le terminal peut être immergé totalement à une profondeur de moins de 30cm pendant une durée illimitée et continué a fonctionner une fois celui-ci sorti de l'eau. Après plusieurs, une telle configuration permet d'obtenir la norme IEC60529 - IP65.

On comprendra aisément à la lecture de la présente demande que les particularités de la présente invention, comme généralement décrites et illustrées dans les figures, puissent être arrangées et conçues selon une grande variété de configurations différentes. Ainsi, la description de la présente invention et les figures afférentes ne sont pas prévues pour limiter la portée de l'invention mais représentent simplement des modes de réalisation choisis.

L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine défini par la portée des revendications jointes, ces modes de réalisation doivent être considérés à titre d'illustration et l'invention ne doit pas être limitée aux détails donnés ci-dessus.

### REFERENCES:

- 1.: Dispositif de l'invention, terminal, terminal de paiement
- 2.: Carénage extérieur
- 3.: Fente adaptée au passage d'une carte à puce
- 4.: Première ouverture du carénage extérieur
- 5.: Seconde ouverture du carénage extérieur
- 6.: Châssis
- 7.: Premier compartiment du châssis
- 8.: Fente du premier compartiment adaptée au passage d'une carte à puce
- 9.: Moyen de lecture d'une carte à puce
- 10.: Seconde compartiment du châssis
- 11.: Ecran
- 12.: Antenne NFC
- 13.: Carte frontale électronique de sécurité
- 14.: Couche de sécurité
- 15.: Troisième compartiment du châssis
- 16.: Carte électronique de connexion
- 17.: Carte électronique principale
- 18.: Membrane de sécurité flexible
- 19.: Cage de sécurité
- 20.: Capteur d'enlèvement du carénage extérieur
- 21.: Connecteur de type Ethernet
- 22.: Connecteur de type Serial
- 23.: Connecteur de type USB
- 24.: Carte mémoire
- 25.: Connecteur de type sans fil (Wi-Fi, GPRS, 3G, 4G, Bluetooth, LiFi, infrarouge, radiofréquence)
- 26.: Carte électronique additionnelle
- 27.: Lecteur de carte à bande magnétique
- 28.: Capteur NFC
- 29.: Capteur vidéo, camera
- 30.: Moyen de connexion, circuit imprimé
- 31.: Moyen d'étanchéité
- 32.: Fente du Slot Moyen d'étanchéité
- 33.: Lèvres de la fente 32
- 34.: Moyen d'étanchéité de la fente 8
- 35.: Moyen d'étanchéité de l'écran 11
- 36.: Tête de lecture du Lecteur de carte à bande magnétique
- 37.: Moyen d'étanchéité de la tête de lecture 36
- 38.: Processeur, microcontrôleur
- 39.: Capteur de proximité
- 40.: Clavier virtuel, surcouche de l'écran tactile

## Revendications

1. Terminal (1) ayant un écran (11) réalisant une fonction d'affichage et de clavier (40) et **caractérisé en ce qu'**il comprend au moins :
- un lecteur de cartes à puce à contact (9),
- un lecteur de cartes à bande magnétique (27), comprenant une tête de lecture (36),
- un capteur NFC (28) comprenant une antenne NFC (12) disposée autour de l'écran (11),
- au moins un capteur de proximité (39), activant certaine fonctionnalités du terminal lors de la détection d'un utilisateur à proximité,
- une carte électronique principale (17) munie d'au moins un processeur (38) et connectée aux lecteurs (9, 27), capteurs (20,28, 29, 39) et à l'écran (11), la carte électronique principale (17) étant configurée pour piloter lesdits lecteurs, capteur et écran, en réalisant des fonctions de détection, de protection de confidentialité des données avec l'écran d'affichage et de contrôle du clavier virtuel sur l'écran, de sécurité et d'authentification des opérations de paiement et des opération de communication sécurisées avec l'environnement extérieur,
- une carte électronique de connexion (16) comprenant au moins une couche de sécurité (14), la carte électronique de connexion (16) étant connectée à la carte électronique principale (17) et apte à permettre au terminal de communiquer avec l'environnement extérieur et de recevoir l'alimentation en énergie,
- une carte électronique frontale de sécurité (13) comprenant au moins une couche de sécurité (14), la carte électronique frontale de sécurité (13) étant apte à être disposée derrière l'écran (11) et l'antenne NFC (12),
- une membrane flexible de sécurité (18) comprenant au moins une couche de sécurité (14), et étant apte à recouvrir les côtés du dispositif (1) à l'exception de la face avant et la face arrière du terminal,
la carte électronique frontale de sécurité (13), la carte électronique de connexion (16) et la membrane flexible de sécurité (18) forment ensemble une cage de sécurité (19) connectée la carte électronique principale (17), dans la cage de sécurité (19) les composant électronique des cartes et les moyen de connexion inter-cartes sont disposés, la densité des conducteurs dans chaque élément de la cage de sécurité (19) étant apte à permettre la détection par la carte électronique principale (17), de toute intrusion à l'intérieur du volume formé par la cage de sécurité et le blocage immédiat par la carte principale (17) de tout traitement d'opération de paiement après la détection d'une intrusion

2. Terminal selon la revendication 1, **caractérisé en ce que** les éléments de la revendication 1 sont disposés dans un carénage extérieur constitué d'une pièce unique (2) apte recouvrir un châssis (6) et comprenant au moins :
- une fente (3) adaptée au passage d'une carte à puce
- une première ouverture (4) sur la face avant du terminal et donnant accès à l'écran (11) nécessaire à la fonction d'affichage et de clavier virtuel (40),
- une seconde ouverture (5) sur une face latérale du terminal et donnant accès à au moins une tête de lecture (36) d'un lecteur de cartes à bande magnétique (27),
le châssis (6) étant constitué d'au moins de trois compartiments :
- un premier compartiment (7) muni d'une fente (8) qui coïncide avec la fente (3) du carénage extérieur et apte à recevoir le lecteur de cartes à puce à contact (9),
- un second compartiment (10) dont l'un des côtés, correspondant à la face avant du terminal, est obstrué par l'écran (11) nécessaire à la fonction d'affichage et de clavier virtuel (40) et par l'antenne NFC (12) entourant l'écran(11),
- un troisième compartiment (15) apte à recevoir la carte électronique principale (17), et dont l'un des côtés du compartiment correspondant à la face arrière du terminal, est obstrué par la carte électronique de connexion (16),
et **en ce que** ladite membrane flexible de sécurité (18) est disposée entre le carénage extérieur (2) et le châssis (6).

3. Terminal selon la revendication 2, **caractérisé en ce que** la carte électronique de connexion (16) est munie d'au moins un capteur d'enlèvement (20) du carénage extérieur (2).

4. Terminal selon l'une des revendications 1 à 3, **caractérisé en ce que** le terminal comprend un capteur vidéo (29, 39) connecté et contrôlé par la carte électronique principale (17).

5. Terminal selon l'une des revendications 1 à 4, **caractérisé en ce que** l'antenne NFC (12) est connectée au capteur NFC (28) sur la carte électronique frontale de sécurité (13), par un circuit imprimé flexible (30(28)), l'écran (11) est connecté à la carte électronique principale (17) par un circuit imprimé flexible (30(11)) passant à travers la cage de sécurité (19), les circuits imprimés (30) pouvant comprendre au moins une couche de sécurité (14).

6. Terminal selon l'une des revendications 1 à 5, **caractérisé en ce que** la carte électronique de connexion (16) comprenant au moins une couche de sécurité (14) et est connectée à la carte électronique principale (17) au moyen d'un connecteur de type couple mal/femelle.

7. Terminal selon l'une des revendications 1 à 6, **caractérisé en ce que** les couches de sécurité (14) consistent en un câblage de sécurité formant un motif recouvrant toute la surface de la couche de sécurité (14), le motif ayant un pas fin empêchant toutes modifications ou altération de la couche de sécurité sans être détectée par la carte électronique principale (17).

8. Terminal selon l'une des revendications 1 à 7, **caractérisé en ce que** le pourtour de la fente (3) du carénage extérieur (2) est constitué d'un matériau translucide et muni d'un rétroéclairage permettant à un utilisateur de détecter tout dispositif étranger au terminal susceptible de capter des informations lors de son utilisation.

9. Terminal selon l'une des revendications 1 à 8, **caractérisé en ce que** le lecteur de cartes à puce (9) est orienté de manière à ce que l'introduction d'une carte à puce dans les fentes (3, 8) est effectuée selon un angle compris entre 0° et 90°, par rapport à la face avant du terminal, de préférence entre 20° et 60°, plus préférentiellement entre 30° et 45°.

10. Terminal selon l'une des revendications précédentes, **caractérisé en ce que** le capteur de proximité (39), les lecteurs (9, 27) et le capteur vidéo (29) sont connectés sur la carte électronique principale (17).

11. Terminal selon l'une des revendications 1 à 10, **caractérisé en ce que** la carte électronique de connexion comprend, sur la surface extérieure à la cage de sécurité (19), au moins un port adapté à recevoir un connecteur du type Ethernet (21), et/ou Série (22), et/ou USB (23), et/ou une carte mémoire (24), et/ou une carte électronique additionnelle afin d'offrir des fonctionnalités additionnelles, en particulier, de communication sans fil (25).

12. Terminal selon l'une des revendications 1 à 11, **caractérisé en ce que** le carénage extérieur (2) et les éléments du terminal sont agencés pour constituer un terminal entièrement étanche, lors d'une immersion totale du terminal à une profondeur de moins de 30cm pendant une durée illimitée.

13. Terminal selon l'une des revendications 1 à 12, **caractérisé en ce que** l'antenne NFC (12) est intégrée dans un joint d'étanchéité (35) entourant écran (11).

14. Utilisation d'un terminal selon l'une des revendications 1 à 13, sur une borne de paiement, de retrait d'argent, ou de contrôle d'un automate de distribution automatique et vente de produits.
